# FASCICULE DE BREVET EUROPEEN

(11) **EP 2 251 789 B1**
(45) Date de publication et mention de la délivrance du brevet: **02.11.2011**
(21) Numéro de dépôt: 10159301.0
(22) Date de dépôt: 08.04.2010
(51) Int. Cl.: G06F 11/16, G05B 9/03

(54) **Module d'entrées/sorties pour capteurs et/ou actionneurs échangeant des informations avec deux unités centrales**
Eingang/Ausgangsmodul für Sensoren und/oder Stellglieder das Information mit zwei Zentralprozessoren austauscht
Input/output module for sensors and/or actuators exchanging information with two central processing units

(30) Priorité: 12.05.2009 FR 0953128
(43) Date de publication de la demande: 17.11.2010
(73) Titulaire: ABB AG, 68309 Mannheim (DE)
(72) Inventeur: Pleche, Philippe, 69740, GENAS (FR)
(74) Mandataire: Maureau, Philippe

(56) Documents cités:
- EP-A- 1 517 200
- DE-A1-102005 008 556
- FR-A- 2 561 410
- US-A- 5 185 693
- US-B1- 6 449 732

## Description

La présente invention concerne un module d'entrée sortie ainsi qu'un automate programmable industriel modulable pour la détection d'une défaillance et/ou pour la sécurisation d'un système électrique comprenant un tel module d'entrée/sortie.

Les automates programmables sont utilisés dans l'industrie afin d'automatiser des processus de commande d'actionneurs à partir d'instructions provenant généralement d'un programme informatique exécuté sur une unité centrale et exploitant des données pouvant provenir de différents capteurs.

Suivant l'application, l'interface entre l'unité centrale et les différents actionneurs et capteurs est assurée par des modules comprenant des extensions d'entrée/sortie sur lesquelles sont branchés ces actionneurs et capteurs. Ces modules ont la particularité d'être facilement remplacés car leurs connexions électrique à l'automate programmable industriel est assurée par l'intermédiaire d'embases fixes sur des rails normalisés se trouvant dans une armoire électrique.

Dans des systèmes nécessitant un niveau de disponibilité plus élevé, il est nécessaire de contrôler la fiabilité des informations échangées. Pour satisfaire à cette exigence, il est connu de disposer d'une seconde unité centrale pour assurer une redondance dans le contrôle/commande des différents processus.

A cet effet, les deux unités centrales sont en liaison permanente, ce qui leur permet d'échanger des informations de diagnostic et de statuts des différents composants de l'installation.

Cependant, cette liaison nécessite l'utilisation d'unités centrales spécifiques avec un logiciel dédié pour pouvoir fonctionner. La redondance s'effectue alors soit en connectant les deux unités centrales aux différents modules par l'intermédiaire de deux bus de terrain dont les informations sont comparées en permanence, soit en effectuant un second contrôle de toutes les informations transitant à travers un unique bus de terrain.

Dans ces configurations, la détection d'une défaillance repose essentiellement sur la communication entre les deux unités centrales et sur l'écoulement d'un temps de réponse maximal d'une unité centrale à l'autre.

Les échanges d'informations entre les unités centrales et les modules d'entrée/sortie se déroulent suivant plusieurs cycles définissant des trames et déterminés par le programme des unités centrales qui se base sur une fréquence d'horloge de l'une des unités centrales.

En cas de perte de liaison entre les deux unités centrales ou sans liaison entre celles-ci, la détection d'erreurs et la réaction qui s'en suit dépend du diagnostic des unités centrales et de l'interprétation et vérification des informations de redondance. Ces interprétations et vérifications surviennent après la réception de chaque trame. Aussi, il est souhaitable de raccourcir le délai de détection.

Le document EP-A1-1 517 200 décrit un contrôleur de secours avec une première unité centrale comprenant un premier processeur communiquant avec une première unité de mémoire dans laquelle est stocké un programme de secours et un programme standard, et une seconde unité centrale comprenant un second processeur indépendant du premier processeur et communiquant avec une seconde unité de mémoire indépendante de la première unité de mémoire et stockant uniquement le programme de secours. Des programmes de synchronisation exécutent le programme standard de la première unité centrale et les programmes de secours de la première et de la seconde unité centrale puis compare l'exécution des deux programmes de secours pour entrer dans un état de secours si l'exécution des deux programmes de secours diffère.

Ce document décrit un système dans lequel deux unités centrales sont en permanence en communication et dans lequel la détection d' un défaut est basée sur la communication entre les deux unités centrales. Ce document ne décrit pas un module d'entrée/sortie avec des moyens de traitement, ceux-ci étant disposés dans les unités centrales.

Le document US-B1- 6 449 732 décrit un système de contrôle exécutant une application pour contrôler les informations renvoyées par plusieurs éléments de contrôle. Le contrôleur comprend une pluralité de processeurs qui exécutent l'application en parallèle et d'au moins un module d'entrée/sortie par processeur qui reçoit et transmet l'information aux dits éléments de contrôle et qui communique avec son processeur respectif. Trois canaux identiques sont utilisés dans chacun des modules d'entrée/sortie dans une configuration de redondance modulaire triplée (TMR). Chacun des processeurs comprend un module d'entrée/sortie dédié. De plus, chaque processeur communique et se synchronise avec les autres processeurs par l'intermédiaire d' un bus à haute vitesse. Le processeur de contrôle d' entrée/sortie situé sur chacun des processeurs contrôle la transmission des données de sortie vers les modules de sortie par l'intermédiaire d' un bus d' entrée/sortie triple.

Les moyens de traitement sont compris dans les unités centrales et non dans les modules d' entrée/sortie. Tout comme le document précédant, ce document décrit un système dans lequel deux unités centrales sont en permanence en communication et dans lequel la détection d' un défaut est basée sur la communication entre les unités centrales.

L'invention visé à résoudre tout ou partie de ces inconvénients.

A cet effet, la présente invention concerne un module d'entrée/sortie pour capteurs et/ou actionneurs comprenant au moins des premiers moyens de communication destinés à la communication avec une première unité centrale par l'intermédiaire d'un premier bus de terrain, et au moins des seconds moyens de communication destinés à la communication avec une seconde unité centrale par l'intermédiaire d'un second bus de terrain comprenant des moyens de traitement agencés : pour établir une sélection d'une unité centrale primaire entre la première unité centrale et la seconde unité centrale en prenant en compte : l'état de fonctionnement de chacun des bus de terrain fournies par le premier bus et le second bus communiquant respectivement avec les premiers moyens de communication et les seconds moyens de communication, les états de fonctionnement ou d'arrêt de chacune des unités centrales fournis respectivement par les premiers moyens de communication et les seconds moyens de communication, et la consultation d'informations fournies par la première unité centrale et la seconde unité centrale communiquant respectivement avec les premiers moyens de communication et les seconds moyens de communication, et pour contrôler les sorties du module d'entrée/sortie en fonction des informations reçues de l'unité centrale primaire sélectionnée.

En fonction des renseignements fournis et de paramétrages initiaux, le module, par l'intermédiaire de ses moyens de traitement est capable d'affecter une priorité sur la sélection des commandes à prendre en compte provenant des deux unités centrales. En cas de défaillance sur cette sélection, le module sélectionne les informations les plus cohérentes pour contrôler le processus et éventuellement passer à une solution de repli prenant en compte les dernières valeurs valides ou bien des valeurs par défaut. De plus, l'établissement d'un ordre d'importance permet de réduire le temps de réaction car l'information n'a pas besoin d'être vérifiée de nouveau pour satisfaire aux exigences de redondance.

Les moyens de traitement fonctionnent avec tout type d'unités centrales et modules d'extensions d'entrée/sortie prévus pour un quelconque automate programmable industriel.

Cette disposition permet d'utiliser des unités centrales existantes sur le marché et non spécialement prévues pour la redondance. Cela n'engendre donc pas les surcoûts qu'auraient engendrés l'utilisation d'unités centrales spécifiques qui auraient également nécessité le développement d'un logiciel d'interface de programmation lui aussi spécifique. De même, les différents capteurs et actionneurs ne nécessitent pas de connexions spécifiques pour être raccordés aux extensions d'entrée/sortie de chaque module.

Selon un mode de réalisation, les moyens de traitement sont agencés pour envoyer aux deux unités centrales des informations concernant par exemple l'état du câblage, l'état de l'autre unité centrale et/ou la cohérence des informations échangées entre les deux unités centrales.

Cette disposition permet au module d'entrée/sortie d'informer les unités centrales sur l'état des composants du système intervenant dans le processus et sur l'état d'avancement de ce même processus. Le module, par ses moyens de traitement peut ainsi renseigner les unités centrales sur le câblage, l'état de l'autre unité centrale, et sur la cohérence des informations échangées.

Selon un mode de réalisation, les moyens de traitement sont agencés pour comparer les signaux fournis par les deux moyens de communications afin de vérifier leur cohérence.

Selon le même mode de réalisation, en cas d'incohérence des signaux fournis par les deux moyens de communications, les moyens de traitement sont agencés pour contrôler les sorties du module d'entrée/sortie en fonction d'une dernière valeur cohérente reçue et/ou d'une valeur par défaut.

Cette disposition permet au processus de ne prendre en compte que des valeurs cohérentes de capteurs dont la prise en compte n'a pas de répercussions aberrantes sur l'action des actionneurs.

Avantageusement, reconnaissant et comparant le nombre d'autres modules reliés à chacun des deux bus de terrain.

Cette disposition permet de détecter une dififérence correspondant à une coupure tel un court-circuit.

Selon le même mode de réalisation, le module d'entrée/sortie comprend un dispositif d'affichage local des informations.

Cette disposition permet à un opérateur de localiser immédiatement l'origine d'un défaut et permet donc une intervention de maintenance plus rapide.

Une embase de connectique peut être agencée pour connecter d'une part le module d'entrée/sortie et d'autre part les deux bus de terrain reliés chacun aux deux unités centrales.

Cette disposition permet une grande modularité dans l'utilisation de différents modules dans un même système électrique.

La présente invention concerne également un ensemble comprenant un module d'entrée/sortie selon l'invention et des modules d'extensions d'entrée/sortie reliés à des capteurs et/ou actionneurs mais aussi un automate programmable industriel modulable comprenant au moins une première unité centrale et une seconde unité centrale, les deux unités centrales étant agencées pour exécuter un même programme, au moins des premiers moyens de communication destinés à la communication avec l'au moins une première unité centrale par l'intermédiaire d'un premier bus de terrain, et au moins des seconds moyens de communication destinés à la communication avec l'au moins une seconde unité centrale par l'intermédiaire d'un second bus de terrain, au moins un module d'entrée/sortie selon l'invention, au moins un capteur et/ou au moins un actionneur reliés au module d'entrée/sortie destinés respectivement au contrôle et à la commande d'un procédé industriel.

La redondance de l'automate programmable industriel modulable n'est ainsi plus basée sur la communication directe entre les deux unités centrales ce qui permet de raccourcir les temps de prise de décision.

D'autres caractéristiques et avantages de l'invention selon un mode de réalisation préféré ressortiront de la description détaillée ci-après, prises en liaison avec des dessins qui illustrent, à titre d'exemple, les principes de l'invention.
La figure 1 est une représentation de l'agencement des unités centrales et des modules.
La figure 2 montre la pile de protocole des deux unités centrales ainsi que la séquence des opérations effectuée au cours d'un cycle de fonctionnement d'un automate programmable industriel modulable selon l'invention.

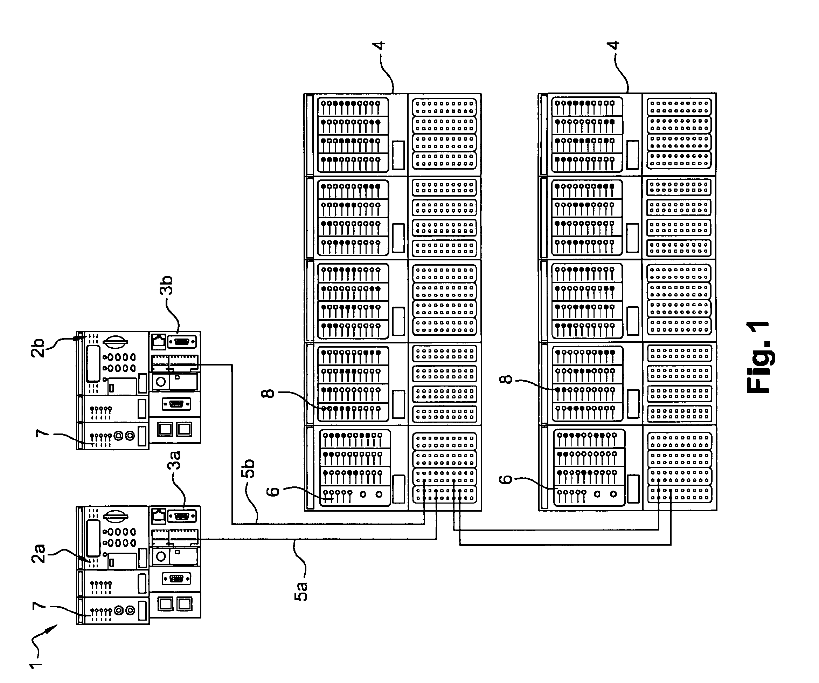

Comme montré sur la figure 1, un automate programmable industriel modulable 1 selon l'invention comprend deux unités centrales 2a, 2b branchés sur leur embase respective 3a, 3b ; des extensions d'entrée/sortie décentralisées 4 reliés aux embases 3a, 3b des deux unités centrales 2a, 2b par l'intermédiaire de deux bus de terrain 5a, 5b; des modules d'entrées/sorties 6 branchés sur leurs embases (non montrées) reliées par un circuit électrique interne aux extensions d'entrée/sortie décentralisées 4.

L'automate programmable industriel modulable 1 selon l'invention peut comprendre jusqu'à quatre modules de communication 7 adossés localement aux unités centrales 2a, 2b, et d'autres extensions d'entrée/sortie décentralisées 4 avec d'autres modules d'entrées/sorties 6 mais reliés aux entrées/sorties de la première extension décentralisée.

Les modules de communication 7 permettent un raccordement aux différents systèmes à bus de terrain standards comme les unités centrales 2a, 2b et permet une intégration aux réseaux existants. Comme illustré sur la figure 1, les modules de communication 7 utilisent le réseau Ethernet existant, ce qui libère les bus de terrain 5a, 5b de la communication entre les deux unités centrales 2a, 2b. Seul le contrôle de la cohérence des informations échangées entre les deux unités centrales 2a, 2b est assurée par les bus de terrains 5a, 5b.

Le module d'entrée/sortie comprend des moyens de traitement 9 constitués par exemple par un microprocesseur, qui permet la mise en forme des signaux, la communication et le transfert des données.

Chaque module d'entrée/sortie 6 selon l'invention comprend un dispositif d'affichage local 8 pour déterminer la ligne contrôlant le process, l'état des lignes et des unités centrales 2a, 2b, les défauts ou l'absence de défauts.

Les modules d'entrées/sorties 6 peuvent fonctionner avec des signaux du type binaire ou alors analogique.

Les bus de terrain 5a, 5b sont des bus de terrain maître/esclave exclusif ; la communication sur ces bus se fait en série et s'effectue par un appel sélectif : le maître envoie une requête à l'esclave puis reçoit sa réponse.

Chacun des bus de terrain 5a, 5b comprend plusieurs trames avec des centres de réseau communication 13a, 13b. Ces trames permettent la lecture et l'écriture des données issues du processus.

Concernant les informations transmises d'une unité centrale 2a ou 2b vers un module d'entrées/sorties 6 à travers une trame d'un bus de terrain 5a ou 5b, la communication avec les unités centrales 2a, 2b est bidirectionnelle et s'effectue par l'intermédiaire des moyens de communication 13a, 13b au travers des deux bus de terrain 5a, 5b par l'envoi de trames.

Chaque trame comporte les informations suivantes.

La trame comprend une information sur l'état de fonctionnement de l'unité centrale 2a ou 2b sur lequel le module d'entrées/sorties 6 est branché, ainsi que des informations sur l'état du bus de terrain 5a ou 5b.

Par exemple, si l'unité centrale 2a ou 2b fonctionne, alors elle enverra une valeur de fonctionnement, tandis que si l'unité centrale ne fonctionne pas alors une valeur d'arrêt sera fournie.

La trame comprend une information sur l'état de fonctionnement d'un bus de terrain 5a ou 5b. Il est par exemple possible que cette information consiste en une variable basculant entre deux valeurs à chaque envoi d'une trame entre le module et une des unités centrales 2a ou 2b. Si la valeur de la variable reste constante lors de l'envoi de deux trames successives alors le module d'entrée/sortie 6 interprétera cette information comme un défaut du bus de terrain 5a ou 5b considéré.

Chaque trame comprend également des informations provenant d'une unité centrale à destination des entrées/sorties.

A partir des informations ci-dessus, les moyens de traitement 9 sélectionnent une unité centrale primaire entre la première unité centrale 2a et la seconde unité centrale 2b en prenant en compte, de préférence dans l'ordre indiqué ci-dessous :
- l'état de fonctionnement de chacun des bus de terrain 5a, 5b fournis par le premier bus 5a et le second bus 5b communiquant respectivement avec les premiers moyens de communication 13a et les seconds moyens de communication 13b,
- les états de fonctionnement ou d'arrêt de chacune des unités centrales 2a, 2b, et
- la consultation d'informations fournies par la première unité centrale 2a et la seconde unité centrale 2b.

L'unité centrale primaire sera donc de préférence celle reliée par un bus de terrain en fonctionnement, cette unité centrale étant elle-même en fonctionnement et fournissant des informations cohérentes.

Dans le cas ou deux unités centrales remplissent ces conditions, une unité centrale par défaut peut être choisie par exemple en fonction de l'emplacement de raccordement au module d'entrées/sorties.

Les trames transmises d'un module d'entrées/sorties 6 vers une des unités centrales 2a ou 2b contiennent les informations suivantes.

La trame comprend une information indiquant à l'unité centrale 2a ou 2b s'il s'agit pour le module d'entrées/sorties 6 de l'unité centrale primaire ou s'il s'agit pour le module d'entrées/sorties 6 de l'unité centrale secondaire.

La trame comprend des informations sur la cohérence des informations échangées avec les deux unités centrales 2a et 2b. En particulier, chaque trame comprend une information sur la cohérence de signaux numérique et une information sur la cohérence de signaux analogiques, les modules d'entrées/sorties 6 pouvant fonctionner avec des signaux du type binaire ou bien analogique.

La trame comprend des informations sur l'état et/ou la présence d'un autre bus de terrain relié au module d'entrée/sortie 6, l'état du câblage, l'état et/ou la présence d'une autre unité centrale reliée au module d'entrée/sortie 6, des éventuels conflits d'instructions.

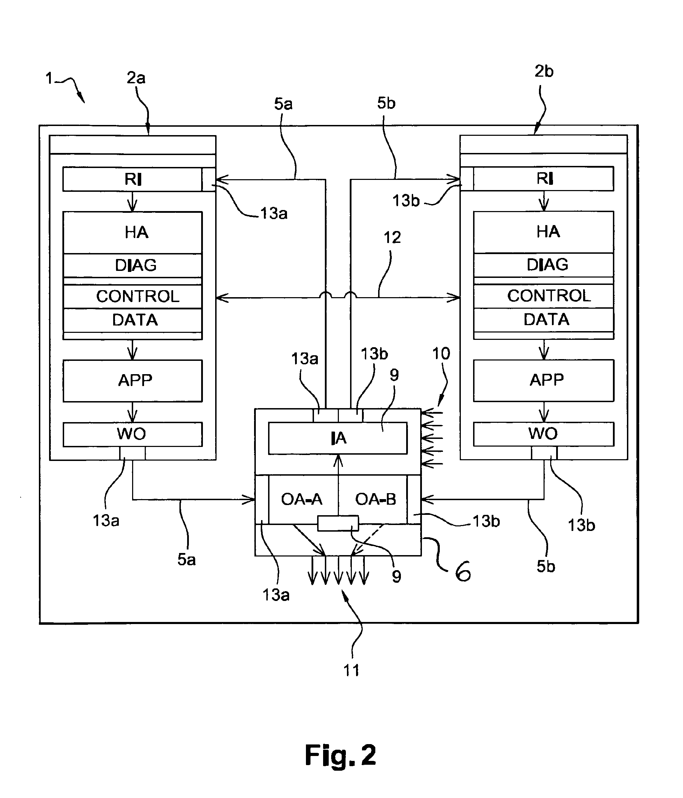

Sur la figure 2, on peut voir les deux unités centrales 2a et 2b reliées chacune respectivement par l'intermédiaire des bus de terrain 5a et 5b à un module d'entrées/sorties 6. Les bus de terrain 5a et 5b sont chacun illustrés en deux parties afin de distinguer les informations d'entrées et de sorties des unités centrales 2a, 2b, cependant il s'agit des même bus de terrain 5a et 5b.

Chacune des unités centrales 2a, 2b reçoit et décode dans un premier temps les données provenant des moyens de traitement 9 du module d'entrées/sorties 6 (« RI »). Ces données contiennent des informations concernant l'état de l'autre unité centrale 2a ou 2b, l'état des bus de terrain 5a et 5b, l'état du module d'entrées/sorties 6 et l'état des capteurs ou actionneurs reliées à celui-ci dont les informations reçues sont représentées sur la figure 2 par les flèches pleines 10 pointant sur le bord du module d'entrées/sorties 6.

Ces informations sont analysées selon un certain ordre par plusieurs fonctions d'une partie « HA » du programme de chacune des unités centrales 2a, 2b séparées en blocs. Parmi ces blocs de fonction, on distingue le bloc de fonction « DIAG » qui permet d'analyser l'état du bus de terrain 5a ou 5b suivant l'unité centrale considérée, puis le bloc de fonction « CONTROL » qui contrôle les échanges de données entre les deux unités centrales 2a et 2b à travers la liaison Ethernet 12 entre les deux unités centrales 2a, 2b par l'intermédiaire du module d'entrées/sorties 6 et qui définie l'unité centrale primaire 2a, et enfin le bloc de fonction « DATA » qui collecte toutes les informations provenant de l'unité centrale primaire 2a et qui crée une table de données qui est transférée à l'unité centrale secondaire 2b par l'intermédiaire des bus de terrain 5a et 5b reliés au module d'entrées/sorties 6. Suivant la taille des données transférées, le transfert des données peut prendre plus qu'un cycle.

Ces données sont ensuite traitées par une autre partie « APP » du programme des deux unités centrales 2a et 2b qui va les encoder en données « WO » afin de pouvoir les envoyer vers les moyens de traitement 9 du module d'entrées/sorties 6 (« OA-A et OA-B »).

Ces moyens de traitement sont en mesure de sélectionner les données à prendre en compte parmi les données envoyées par les deux unités centrales 2a et 2b.

Le module d'entrées/sorties 6 transmet ensuite ces données aux capteurs ou actionneurs reliées aux entrées/sorties de celui-ci. Ces informations transmises sont représentées sur la figure 2 par les flèches pleines 11 issues du bord du module d'entrées/sorties 6.

Ainsi, il est possible d'intégrer un tel module d'entrée/sortie 6 dans un automate programmable industriel modulable 1 afin d'appliquer une méthode de détection d'une défaillance et/ou de sécurisation d'un système électrique devant répondre à un niveau d'exigence de sécurité élevé sans qu'il ne soit nécessaire d'avoir recours à des unités centrales spécifiques fonctionnant avec un programme dédié au système à sécuriser.

Comme il va de soi, la présente invention ne se limite pas à la seule forme d'exécution de module d'entrées/sorties 6 et de cet automate programmable industriel modulable 1 décrite ci-dessus à titre d'exemple, mais elle embrasse au contraire toutes les variantes.

## Revendications

1. Module d'entrée/sortie (6) pour capteurs et/ou actionneurs comprenant au moins des premiers moyens de communication (13a) destinés à la communication avec une première unité centrale (2a) par l'intermédiaire d'un premier bus de terrain (5a), et au moins des seconds moyens de communication (13b) destinés à la communication avec une seconde unité centrale (2b) par l'intermédiaire d'un second bus de terrain (5b) comprenant:
des moyens de traitement (9) agencés :
- pour établir une sélection d'une unité centrale primaire entre la première unité centrale (2a) et la seconde unité centrale (2b) en prenant en compte : l'état de fonctionnement de chacun des bus de terrain (5a, 5b) fournis par le premier bus (5a) et le second bus (5b) communiquant respectivement avec les premiers moyens de communication (13a) et les seconds moyens de communication (13b), les états de fonctionnement de chacune des unités centrales (2a, 2b) fournis respectivement par les premiers moyens de communication (13a) et les seconds moyens de communication (13b), et la consultation d'informations fournies par la première unité centrale (2a) et la seconde unité centrale (2b) communiquant respectivement avec les premiers moyens de communication (13a) et les seconds moyens de communication (13b), et
- pour contrôler les sorties du module d'entrée/sortie (6) en fonction des informations reçues de l'unité centrale primaire sélectionnée.

2. Module d'entrée/sortie (6) selon l'une des revendications précédentes dans lequel les moyens de traitement (9) sont agencés pour envoyer aux deux unités centrales (2a, 2b) des informations concernant par exemple l'état du câblage, l'état de l'autre unité centrale et/ou la cohérence des informations échangées entre les deux unités centrales (2a, 2b).

3. Module d'entrée/sortie (6) selon l'une des revendications précédentes, dans lequel les moyens de traitement (9) sont agencés pour comparer les signaux fournis par les deux moyens de communications (13a, 13b) afin de vérifier leur cohérence.

4. Module d'entrée/sortie (6) selon la revendication 3, dans lequel en cas d'incohérence des signaux fournis par les deux moyens de communications, les moyens de traitement (9) sont agencés pour contrôler les sorties du module d'entrée/sortie (6) en fonction d'une dernière valeur cohérente reçue et/ou d'une valeur par défaut.

5. Module d'entrée/sortie (6) selon l'une des revendications précédentes reconnaissant et comparant le nombre d'autres modules (6) reliés à chacun des deux bus de terrain (5a, 5b).

6. Module d'entrée/sortie (6) selon l'une des revendications précédentes dans lequel le module d'entrée/sortie (6) comprend un dispositif d'affichage (8) local des informations.

7. Ensemble comprenant un module d'entrée/sortie (6) selon l'une des revendications précédentes et des modules d'extensions (4) d'entrée/sortie reliés à des capteurs et/ou actionneurs.

8. Automate programmable industriel modulable (1) comprenant
au moins une première unité centrale (2a) et une seconde unité centrale (2a, 2b), les deux unités centrales étant agencées pour exécuter un même programme,
au moins des premiers moyens de communication (13a) destinés à la communication avec l'au moins une première unité centrale (2a) par l'intermédiaire d'un premier bus de terrain (5a), et au moins des seconds moyens de communication (13b) destinés à la communication avec l'au moins une seconde unité centrale (2b) par l'intermédiaire d'un second bus de terrain (5b),
au moins un module d'entrée/sortie (6) selon l'une des revendications 1 à 7,
au moins un capteur et/ou au moins un actionneur reliés au module d'entrée/sortie (6) destinés respectivement au contrôle et à la commande d'un procédé industriel.

## Claims

1. An input-output module (6) for sensors and/or actuators comprising at least first communication means (13a) intended to communicate with a first central unit (2a) via a first fieldbus (5a), and at least second communication means (13b) intended to communicate with a second central unit (2b) via a second fieldbus (5b) comprising:
processing means (9) arranged to:
- establish a selection of a primary central unit between the first central unit (2a) and the second central unit (2b) taking into account: the operating state of each of the fieldbuses (5a, 5b) provided by the first bus (5a) and the second bus (5b) respectively communicating with the first communicating means (13a) and the second communicating means (13b), the operating states of each of the central units (2a, 2b) respectively provided by the first communication means (13a) and the second communication means (13b), and the viewing of information provided by the first central unit (2a) and the second central unit (2b) respectively communicating with the first communication means (13a) and the second communication means (13b), and
- monitor the outputs of the input/output module (6) as a function of the information received from the selected primary central unit.

2. The input/output module (6) according to one of the preceding claims, wherein the processing means (9) are arranged to send the two central units (2a, 2b) information for example concerning the status of the cabling, the status of the other central unit and/or the coherence of the information exchanged between the two central units (2a, 2b).

3. The input/output module (6) according to one of the preceding claims, wherein the processing means (9) are arranged to compare the signals provided by the two communication means (13a, 13b) so as to verify their coherence.

4. The input/output module (6) according to claim 3, wherein in the case of incoherence of the signals provided by the two communication means, the processing means (9) are arranged to monitor the outputs of the input/output module (6) as a function of a last-received coherent value and/or a default value.

5. The input/output module (6) according to one of the preceding claims, recognizing and comparing the number of other modules (6) connected to each of the two fieldbuses (5a, 5b).

6. The input/output module (6) according to one of the preceding claims, wherein the input/output module (6) comprises a local display device (8) for the information.

7. An assembly comprising an input/output module (6) according to one of the preceding claims and extension input/output modules (4) connected to sensors and/or actuators.

8. Configurable industrial programmable machine (1) comprising
at least one first central unit (2a) and one second central unit (2a, 2b), the two central units being arranged to run a same program,
at least one of the first communication means (13a) intended to communicate with at least one first central unit (2a) via a first fieldbus (5a), and at least second communication means (13b) intended to communicate with at least one second central unit (2b) via a second fieldbus (5b),
at least one input/output module (6) according to one of claims 1 to 7,
at least one sensor and/or at least one actuator connected to the input/output module (6) intended respectively to monitor and control an industrial process.

## Patentansprüche

1. Eingangs-/Ausgangsmodul (6) für Sensoren und/oder Stellglieder, das mindestens erste Kommunikationsmittel (13a), die für die Kommunikation mit einer ersten Zentraleinheit (2a) über einen ersten Feldbus (5a) bestimmt sind, und mindestens zweite Kommunikationsmittel (13b), die für die Kommunikation mit einer zweiten Zentraleinheit (2b) über einen zweiten Feldbus (5b) bestimmt sind, umfasst, das Verarbeitungsmittel (9) umfasst, die ausgebildet sind:
- um eine Auswahl einer primären Zentraleinheit zwischen der ersten Zentraleinheit (2a) und der zweiten Zentraleinheit (2b) vorzunehmen unter Berücksichtigung: des Funktionszustands jedes Feldbusses (5a, 5b), der vom ersten Bus (5a) und vom zweiten Bus (5b) geliefert wird, die jeweils mit den ersten Kommunikationsmitteln (13a) und den zweiten Kommunikationsmitteln (13b) kommunizieren, der Funktionszustände jeder der Zentraleinheiten (2a, 2b), die jeweils von den ersten Kommunikationsmitteln (13a) und den zweiten Kommunikationsmitteln (13b) geliefert werden und der Konsultierung von Informationen, die von der ersten Zentraleinheit (2a) und der zweiten Zentraleinheit (2b) geliefert werden, die jeweils mit den ersten Kommunikationsmitteln (13a) und den zweiten Kommunikationsmitteln (13b) kommunizieren, und
- um die Ausgänge des Eingangs-/Ausgangsmoduls (6) in Abhängigkeit der von der ausgewählten primären Zentraleinheit enthaltenen Informationen zu steuern.

2. Eingang-/Ausgangsmodul (6) nach einem der vorangehenden Ansprüche, wobei die Verarbeitungsmittel (9) ausgebildet sind, um an die zwei Zentraleinheiten (2a, 2b) Informationen zu schicken, die zum Beispiel den Zustand der Verkabelung, den Zustand der anderen Zentraleinheit und/oder die Kohärenz der zwischen den zwei Zentraleinheiten (2a, 2b) ausgetauschten Informationen betreffen.

3. Eingangs-/Ausgangsmodul (6) nach einem der vorangehenden Ansprüche, wobei die Verarbeitungsmittel (9) ausgebildet sind, um die von den zwei Kommunikationsmitteln (13a, 13b) gelieferten Signale zu vergleichen, um deren Kohärenz zu überprüfen.

4. Eingangs-/Ausgangsmodul (6) nach Anspruch 3, wobei die Verarbeitungsmittel (9) ausgebildet sind, um bei Inkohärenz der von den zwei Kommunikationsmitteln gelieferten Signale die Ausgänge des Eingangs-/Ausgangsmoduls (6) in Abhängigkeit eines letzten empfangenen kohärenten Werts und/oder eines Standardwerts zu steuern.

5. Eingangs-/Ausgangsmodul (6) nach einem der vorangehenden Ansprüche, das die Anzahl anderer Module (6), die mit jedem der zwei Feldbusse (5a, 5b) verbunden sind, erkennt und vergleicht.

6. Eingangs-/Ausgangsmodul (6) nach einem der vorangehenden Ansprüche, wobei das Eingangs-/Ausgangsmodul (6) eine lokale Anzeigevorrichtung (8) der Informationen umfasst.

7. Gruppe, die ein Eingangs-/Ausgangsmodul (6) nach einem der vorangehenden Ansprüche umfasst und Eingangs-/Ausgangs-Erweiterungsmodule (4), die mit Sensoren und/oder Stellgliedern verbunden sind.

8. Modulierbarer programmierbarer Industrieautomat (1), der umfasst mindestens eine erste Zentraleinheit (2a) und eine zweite Zentraleinheit (2a, 2b), wobei die zwei Zentraleinheiten ausgebildet sind, um dasselbe Programm durchzuführen,
mindestens erste Kommunikationsmittel (13a), die für die Kommunikation mit der mindestens einen ersten Zentraleinheit (2a) über einen ersten Feldbus (5a) vorgesehen sind, und mindestens zweite Kommunikationsmittel (13b), die für die Kommunikation mit der mindestens einen zweiten Zentraleinheit (2b) über einen zweiten Feldbus (5b) vorgesehen sind,
mindestens ein Eingangs-/Ausgangsmodul (6) nach einem der Ansprüche 1 bis 7,
mindestens einen Sensor und/oder mindestens ein Stellglied, die mit dem Eingangs-/Ausgangsmodul (6) verbunden sind und jeweils für die Kontrolle und Steuerung eines industriellen Prozesses bestimmt sind.
